# EUROPEAN PATENT APPLICATION

(11) **EP 1 965 574 A1**
(43) Date of publication of application: **03.09.2008**
(21) Application number: 07290249.7
(22) Date of filing: 27.02.2007
(51) Int. Cl.: H04M 3/42, H04Q 3/00

(54) **Routing of local number portability calls**

(71) Applicant: Alcatel Lucent, 75008 Paris (FR)
(72) Inventor: Spitzer, Uwe, 71522 Backnang (DE); Stahl, Bernd, 71229 Leonberg (DE); Breiholz, Andreas, 71723 Grossbottwar (DE)
(74) Representative: Zinsinger, Norbert

(57) **Abstract**

The invention concerns a method of routing a telephone call in a network (21, 22), and a routing node (219) and a computer program product to execute this method. The routing node (219) of the network (21, 22) receives a call request (2001) of a telephone call originating from a calling party. The call request (2001) specifies a telephone number associated with a called party. The routing node (219) refers to a memory unit of the routing node (219) whereby the memory unit comprises portability-related information. The routing node (219) determines if said telephone number is a ported telephone number based on the portability-related information stored in the memory unit. If said telephone number is a ported telephone number, the routing node (219) provides for a routing of the telephone call to the called party based on said portability-related information.

## Description

The present invention relates to the field of number portability, in particular to a method of routing a telephone call in a network, and a routing node and a computer program product to execute said method.

Operators in nearly all telephone networks must use number portability (= NP). Traditionally NP works via #7 networks and is located in special NP servers with a number portability data base (= NPDB) for the whole operator's network or countrywide.

Request for Comments (= RFC) document 3482 maintained by the IETF (= Internet Engineering Task Force) provides an overview of the portability of E164 telephone numbers, i.e., ordinary telephone numbers in the GSTN (= Global Switched Telephone Network).

Among other techniques described in this document, NP can be achieved by QoR (= Query on Release). Fig. 1a is a block diagram of a QoR number portability scheme according to the prior art. It shows a telephone network comprising a first sub-network 1 operated by a first network operator and a second sub-network 2 operated by a second network operator. A calling party has subscribed to the first sub-network 1 and accesses the first sub-network 1 from a telephone extension 10. The calling party has been assigned a telephone number (= TN) by the first network operator.

A called party originally was subscribed to the first sub-network 1 and used to access the first sub-network 1 from a telephone extension 11 which is now switched off. Meanwhile, the called party has moved and currently has subscribed_to the second sub-network 2. For convenience reasons, the called party has ported the TN that was assigned to him by the first sub-network 1 to the second sub-network 2 and accesses the second sub-network 2 from a telephone extension 21. The first sub-network 1 is the donor network and the old serving network with respect to the called party, i.e., it is the network that first assigned a TN to the called party and it is the network that previously served the ported TN before the TN was ported to a current serving network 2.

The first sub-network 1 comprises network nodes 101 a, 102a and 103, signalling transfer points (= STP) 110 and 111, and a service control point (= SCP) 120. The STPs 110, 111 are central switches for signalling traffic, the SCP 120 is a central network node providing auxiliary services for the entire network. In particular, the SCP 120 provides a subscriber data base and processes data base inquiries. The second sub-network 2 comprises network nodes 201 and 202. The network node 101 a is a switch serving the telephone extension 10 utilised by the calling party, the network node 103 is a switch which formerly served the telephone extension 11 used by the called party, and the network node 202 is a switch serving the telephone extension 21 currently used by the called party.

The calling party triggers a telephone call to the called party at his telephone extension 10, i.e., he dials the TN assigned to the called party on his telephone. A call request 1001 is generated and sent to the network node 101 a. The network nodes 101 a and 102a route 1002, 1003 the call request to the network node 103 to which the TN was administratively assigned. The network node 103 detects that the dialled TN has been ported and releases the call, indicating that the dialled TN has been ported out of that switch 103.

The call request runs back 1004 to a trigger switch, i.e., the network node 102a, which sends a query 1005, 1006 via the STP 111 to the - centrally administered - SCP 120 comprising a NPDB. The SCP 120 looks up the NPDB and returns 1007, 1008 information about the ported TN to the trigger point, i.e., the network node 102a. This information may be, e.g., a location routing number (= LRN) assigned to the switch 202 currently hosting the ported dialled TN.

The trigger switch 102a uses this information to route the call to the called party. The network node 102a routes 1009, 1010 the call request by means of the received LRN via the network node 201 to the network node 202 serving the telephone extension associated with the ported TN. The network node 202 finally sends 1011 the call request to the terminal of the called party.

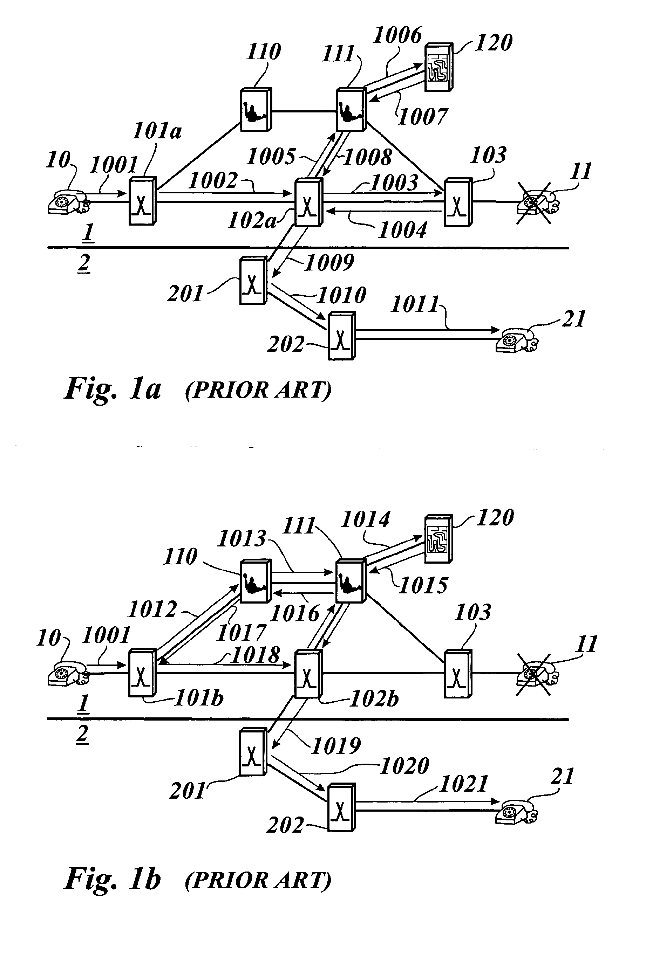

Another NP solution described in the RFC document 3482 is the All Call Query (= ACQ) scheme. Fig. 1 b is a block diagram of an ACQ number portability scheme according to the prior art. The constellation shown in Fig. 1 b is similar to the one shown in Fig. 1 a, the network nodes 101 b and 102b corresponding to the network node 101 a and 102a, respectively. One difference is that the network nodes 101 b and 102b follow different routing rules.

The calling party triggers a telephone call to the called party at his telephone extension 10, i.e., he dials the TN assigned to the called party on his telephone. A call request 1001 is generated and sent to the network node 101 b. The network nodes 101 b sends a query 1012, 1013, 1014 via the STPs 110, 111 to the SCP 120. The SCP 120 looks up a NPDB, finds a routing number associated with the dialled telephone number and returns 1015, 1016, 1017 the routing number to the network node 101 b. The network node 101 b routes 1018 the call request to the next network node 102b according to the routing number. From there, the call request is routed 1019, 1020 via the network node 201 to the network node 202 serving the telephone extension associated with the ported telephone number. The network node 202 finally sends 1021 the call request to the terminal of the called party.

This detailed description of the prior art NP shows that a considerable back-and-forth traffic to the original telephone extension 11 and the centrally administrated SCP 120 is needed. Due to the involved traffic, prior art number portability demands considerable network resources.

It is the object of the present invention to provide an improved number portability service in a telecommunications network.

The object of the present invention is achieved by a method of routing a telephone call in a network, whereby the method comprises the steps of receiving at a routing node of the network a call request of a telephone call originating from a calling party, the call request specifying a telephone number associated with a called party, referring by the routing node to a memory unit of the routing node, the memory unit comprising portability-related information, determining by the routing node if said telephone number is a ported telephone number based on the portability-related information stored in the memory unit, and if said telephone number is a ported telephone number, providing for a routing of the telephone call to the called party based on said portability-related information. The object of the present invention is also achieved by a routing node of a network for routing a telephone call in the network, the routing node comprising a control unit and a memory unit, whereby the control unit is adapted to receive a call request of a telephone call originating from a calling party, the call request specifying a telephone number associated with a called party, refer to the memory unit comprising portability-related information, determine if said telephone number is a ported telephone number based on the portability-related information stored in the memory unit, and if said telephone number is a ported telephone number, provide for a routing of the telephone call to the called party based on said portability-related information. Furthermore, the object of the present invention is achieved by a computer program product for routing a telephone call in a network, whereby the computer program product, when executed by a routing node of the network, performs the steps of referring, on receipt of a call request of a telephone call originating from a calling party wherein the call request specifies a telephone number associated with a called party, by the routing node to a memory unit of the routing node, the memory unit comprising portability-related information, determining by the routing node if said telephone number is a ported telephone number based on the portability-related information stored in the memory unit, and if said telephone number is a ported telephone number, providing for a routing of the telephone call to the called party based on said portability-related information

According to the present invention, a NP mechanism is located in a routing node and handled as a routing task. This allows - in addition to the basic NP features - additional features such as a number translation which can depend on other routing parameters like, e.g., destination of the telephone call, origin of the telephone call, signalling parameters, time, priority level, user preferences, etc.

Because the present invention provides a NP framework without centralized special NP servers, the involved NP-related traffic through the network is significantly reduced. Therefore, the present invention allows a saving of network resources.

Due to the localization of the NP functioning at a routing machine, the NP becomes highly flexible and configurable. Instead of being limited to a specialized and centralized server, the NP features are easily assigned to any routing node of a network.

The present invention reflects the global aspect of NP. With the invention, it is possible to handle NP globally. It allows a global player to directly send calls to an operator of the called telephone address.

Further advantages are achieved by the embodiments of the invention indicated by the dependent claims.

According to a preferred embodiment of the invention, if a network node without routing capability receives a call request of a telephone call originating from the calling party, the node forwards the call request to a routing node where the NP functions are located. A network node, also called network element, is a piece of telecommunications equipment that provides support or services to a user of the network node, and which can be managed over a specific interface.

Usually, the network comprises several routing nodes with NP features. Therefore, a network node without routing capability which receives a call request of a telephone call is able to find a routing node within a short routing distance. Consequently, the network resources are not highly charged.

Preferably, the routing node is a routing node of a telephone network. The routing node can be a stand-alone device like a switch or an exchange of a telephone network with additional routing functionalities that holds NP data on its own. The routing node can be a soft-switch, i.e., a device which performs switching functions entirely by means of software running on a computer system. The routing node can also be a signalling server within an IP based telephone application (IP = Internet Protocol).

According to another preferred embodiment of the invention, the routing node handles the portability-related processing of the telephone call as a routing task. The number portability features are provided by the routing node within the framework of the routing mechanism executed by the routing node. The network node refers to portability-related information stored in the network node. Thus, the routing node is able to specify a network node currently serving the ported telephone number. Correspondingly, the telephone call is routed to the specified network node.

According to another preferred embodiment of the invention, the routing node utilises the synergy of the routing and the portability features being located at the same location and in the same device, respectively. The routing node processes a call request of a telephone call by taking into account one or more of the following routing parameters: destination of the telephone call, origin of the telephone call, signalling parameters, time, priority level, user preferences. The routing node refers to the memory unit where preferences of a user are stored. The memory unit may also comprise general definitions concerning the routing of a telephone call addressed to a ported telephone number. The routing node combines both the routing elements and the portability elements stored in the memory unit and generates a routing scheme which advantageously brings together both element types.

In a preferred embodiment, the routing node accumulates portability-related data during the routing operation. The routing node analyses the accumulated data and gains update data concerning portability-related information from the analysis. The routing node updates the portability-related information of said memory unit with said update data. Thus, the number portability follows changes in the network that are discovered by means of the routing tasks.

According to another preferred embodiment of the invention, the routing node holds portability-related information in a cache memory of said memory unit. The cache memory holds the portability-related information that is often needed during the routing operation. Therefore, the routing node can efficiently access the portability-related information in the cache memory for routing purposes, i.e., in an easy and fast manner.

Preferably, the routing node initiates an announcement regarding the portability to the calling party. Having received a call request, the routing node accesses corresponding NP data in the NPDB. The NP data may indicate that a telephone number has been ported out of the previously used telephone extension but fails to indicate the currently used telephone extension, e.g., because of delayed notice from the network operators. The NP features implemented in the routing node may include a default process to be followed in this case. For instance, a calling party may be informed by means of an announcement - after dialling a telephone number associated with a called party - that the called party is not available at this number any more.

Preferably, the routing node is a stand-alone network node. It is also possible that the routing node is a soft-switch of the telephone network, e.g. a software package integrated into a gateway controller. For instance, the routing node is Alcatel's EARS software package with number portability features, integrated in Alcatel's A5020 MGC, including generic interface, service logic and database which determined the routing for the A5020 MGC (EARS = Extended Assistant Routing System; MGC = Media Gateway Controller).

These as well as further features and advantages of the invention will be better appreciated by reading the following detailed description of presently preferred exemplary embodiments taken in conjunction with accompanying drawings of which:
- Fig. 2: is a block diagram of a local number portability scheme according to an embodiment of the invention.
- Fig. 3: is a block diagram of a global number portability scheme according to an embodiment of the invention.
- Fig. 4: is a block diagram of a routing node according to an embodiment of the invention.

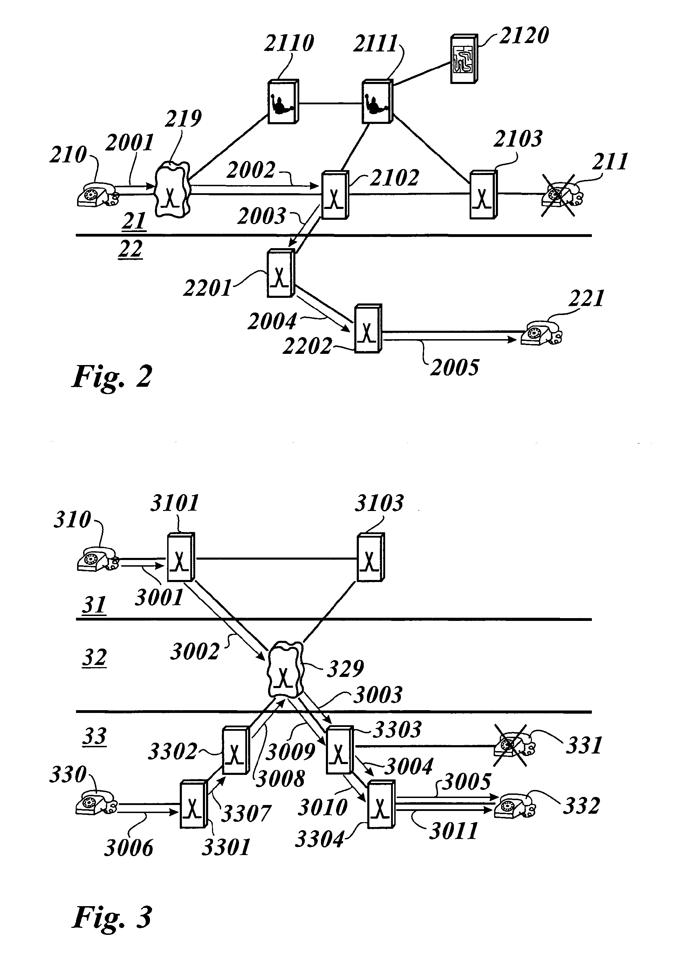

Fig. 2 shows a block diagram according to the present invention. A telephone network comprises a first sub-network 21 operated by a first network operator and a second sub-network 22 operated by a second network operator. The telephone network consisting of the sub-networks 1 and 2 may be any telecommunications network using or based on PSTN, TDN, IMS, IP, NGN, etc. (PSTN = Public Switched Telephone Network; TDN = Telekom Designed Network; IMS = IP Multimedia Subsystem; NGN = Next Generation Network).

A calling party has subscribed to the first sub-network 21 and accesses the first sub-network 21 from a telephone extension 210. The calling party has been assigned a telephone number by the first network operator. The telephone number may a E.164 telephone number, i.e., a telephone number according to the international public telecommunication numbering plan of the ITU, a VoIP-based telephone address, e.g., 1234@sip-server.fr or ENUM-based 9.8.7.6.5.4.3.2.1.3.3.e164.arpa (ITU = International Telecommunication Union; VolP = Voice over IP; ENUM = Telephone Number Mapping).

A called party originally was subscribed to the first sub-network 21 and used to access the first sub-network 21 from a telephone extension 211 which is now switched off. The first sub-network 21 is the donor network with respect to the called party, i.e., it is the network that first assigned a telephone number to the called party. Meanwhile, the called party has moved and currently has subscribed to the second sub-network 22. For convenience reasons, the called party has ported the telephone number that was assigned to him by the first sub-network 21 to the second sub-network 22 and accesses the second sub-network 22 from a telephone extension 221.

The first sub-network 21 comprises network nodes 2102 and 2103, STPs 2110 and 2111, and a SCP 2120. The function of the STPs 2110, 2111 and the SCP 2120 is as aforementioned with respect to Fig. 1a. The second sub-network 22 comprises network nodes 2201 and 2202. The telephone extension 210 of the calling party is served by the routing node 219 comprising number portability features.

The routing node 219 comprises all network nodes with routing function, i.e., executing a selection of an exit route for an incoming call. For instance, the routing node 219 is represented by Alcatel's EARS software package with number portability features integrated in Alcatel's 5020 MGC. The EARS package is a member of the EAxS (= Extended Assistant System Family) family of assistant server systems for tasks such as routing (EARS), signalling (EASS), user profiles (EAUS), etc. The EARS hosts services that act upon a set of database.

The EARS is an integral part of 5020 MGC that is able to host existing 5020 MGC routing functionality (currently realised in PATED and TRC) and advanced routing features (PATED = Prefix Analysis and Task Element Definition; TRC = Trunk Resource Co-ordinator). It is based on the UNIX operating system, fully scalable and high-available. The introduction of EARS into 5020 MGC-based systems involves only minimal impact in 5020 MGC itself. The routing functionality of 5020 MGC remains intact, and is only extended to communicate with the EARS. The communication between the 5020 MGC routing functionality in PATED with EARS is configurable in a very flexible manner by means of one relation of PATED. This implies that a smooth migration of the routing functionality from 5020 MGC to EARS can be configured by the operator.

The calling party triggers a telephone call to the called party at his telephone extension 210, i.e., he dials on his telephone the telephone number assigned to the called party. A call request 2001 is generated and sent to the routing node 219. The routing node 219 refers to a NPDB implemented in the routing node 219 and discovers that the dialled telephone number indicated in the call request 2001 is a ported telephone number. The routing node 219 identifies a routing rule associated with the ported telephone number. For instance, the routing rule specifies a routing number which allows to route 2002, 2003,2004 the call request to the network node 2202 currently serving the ported telephone number. The network node 2202 transmits 2005 the call request to the associated telephone extension 221.

The routing node 210 with NP feature integrates the routing functions and the NP features. Preferably, the NP function is executed as a function of NP rules specified in the NPDB. For instance, the NP shall support - similar to a routing task - a calendar and/or time function, i.e., the NP takes into account the current date, time of day, day of week, holidays, time zones, etc. A user can register with the NP function and provide preferences that are taken into account.

Fig. 3 shows a block diagram according to another embodiment of the present invention. Fig. 3 shows a telephone network, e.g., the GSTN, including a first sub-network 31 of a country A, a second sub-network 32 of a country B, and a third sub-network 33 of a country C, each operated by a different country-wide operator.

The first sub-network 31 comprises network nodes 3101 and 3102. A routing node 329 comprising number portability features according to the present invention is installed in the sub-network 32 of the country B. The third sub-network 33 comprises network nodes 3301, 3302, 3303 and 3304.

A first calling party has subscribed to the first sub-network 31 and accesses the first sub-network 31 from a telephone extension 310. The first calling party has been assigned a telephone number by a network operator of the first sub-network 31 in the country A. The telephone extension 310 of the first calling party is served by the network node 3101.

A second calling party has subscribed to the third sub-network 33 and accesses the third sub-network 33 from a telephone extension 330. The third calling party has been assigned a telephone number by a network operator of the third sub-network 33 in the country C. The telephone extension 330 of the first calling party is served by the network node 3301.

A called party originally was served by the network node 3303 located in the sub-network 33 of the country C. The called party used to access the third sub-network 33 from a telephone extension 331 which is now switched off. The third sub-network 33 is the donor network with respect to the called party, i.e., it is the network that first assigned a telephone number to the called party. Meanwhile, the called party has moved to another location within the country C and is served by another node, i.e., the network node 3304, also located in the sub-network 33 of the country C. For convenience reasons, the called party has ported the telephone number that was assigned to him by the third sub-network 33 to the other network node 3304 and accesses the third sub-network 33 from a telephone extension 332.

The first calling party triggers a telephone call to the called party at his telephone extension 310, i.e., he dials on his telephone the telephone number assigned to the called party. A call request 3001 is generated and sent to the network node 3101. The network node 3101 forwards 3002 the call request across an operator border to the routing node 329. The routing node 329 refers to a NPDB implemented in the routing node 329 and discovers that the dialled telephone number indicated in the call request 3001 is a ported telephone number. The routing node 329 identifies a routing rule associated with the ported telephone number. For instance, the routing rule specifies a routing number which allows to route 3003, 3004 the call request to the network node 3304 currently serving the ported telephone number. The network node 3304 transmits 3005 the call request to the associated telephone extension 332.

After the first session between the first calling party and the called party is ended, the second calling party wishes to set up a session with the called party. The second calling party triggers a telephone call to the called party at his telephone extension 330, i.e., he dials on his telephone the telephone number assigned to the called party. A call request 3006 is generated and sent to the network node 3301. The network node 3301 forwards 3007, 3008 the call request via the network node 3302 across an operator border to the routing node 329. The routing node 329 refers to a NPDB implemented in the routing node 329 and discovers that the dialled telephone number indicated in the call request 3006 is a ported telephone number. The routing node 329 identifies a routing rule associated with the ported telephone number. For instance, the routing rule specifies a routing number which allows to route 3009, 3010 the call request to the network node 3304 currently serving the ported telephone number. The network node 3304 transmits 3011 the call request to the associated telephone extension 332.

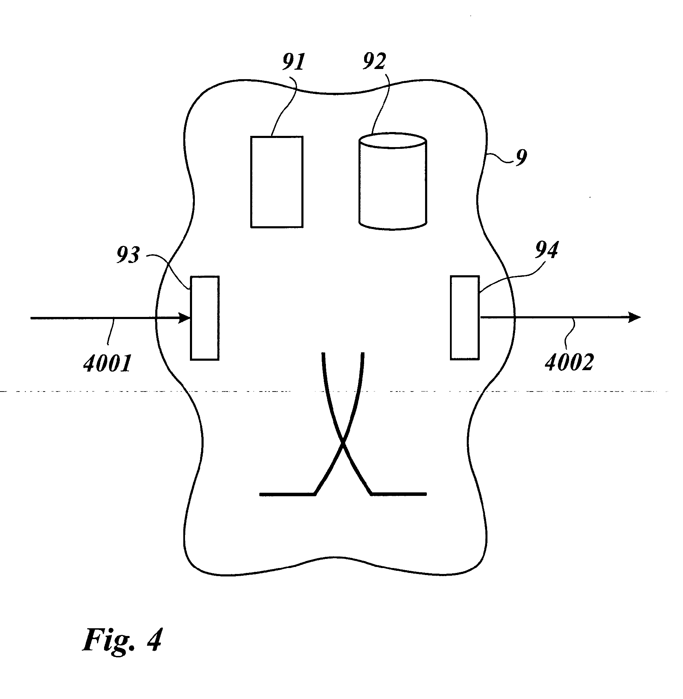

Fig. 4 shows functional elements of a routing node 9 according to the present invention. From a functional point for view, the routing node 9 comprises two interfaces 93 and 94, i.e., an incoming interface unit 93 for receiving incoming calls and an outgoing interface unit 94 for sending outgoing calls after selecting an exit route for the outgoing calls. The routing node 9 further comprises a control unit 91 for controlling the functions of the routing node 9 and a memory unit 92 for storage purposes.

The routing node 9 is composed of one or several inter-linked computers, i.e., a hardware platform, a software platform basing on the hardware platform and several application programs executed by the system platform formed by the software and hardware platform. The functionalities of the routing node 9 are provided by the execution of these application programs. The application programs or a selected part of these application programs constitute a computer software product providing a routing and NP service as described in this description, when executed on the system platform. Further, such computer software product is constituted by a storage medium 92 storing these application programs or said selected part of application programs.

On receipt of an incoming call 4001 by the incoming interface unit 93, the call is sent to the control unit 91 and analysed by the control unit 91. The control unit 91 initiates a look-up in the memory unit 92, preferably comprising a routing data base in combination with a NP data base. The memory unit 92 comprises data about whether a telephone number the call 4001 is directed to is a ported telephone number. The memory unit 92 also comprises the usual routing data of a routing machine, i.e., data for finding the next hops for the call 4001.

Suppose that the routing data is out-of-date and the routing of the call ends at a wrong switch. Then the call may be routed back to the routing node 9 and the data bases in the memory unit 92 may be updated on the basis of the information gained from the wrong routing. The memory unit 92 may also comprise a cache where often needed routing and NP data can be stored temporarily and accessed very fast. This may be helpful for calls directed to often needed telephone numbers, e.g., recently having been ported.

The routing -- node 9 takes advantage of the fact that the routing data base and

The routing node 9 takes advantage of the fact that the routing data base and the NP-related data base are accessible in parallel, thus providing many synergy effects. For instance, the routing node 9 is able to offer a number portability service and a number translation, respectively, which can depend on routing parameters like, e.g., destination of the telephone call, origin of the telephone call, signalling parameters, time, priority level, catastrophic level, user preferences, etc. These routing parameters may be editable by a subscriber of the telephone network. Thus, the control unit 91 takes into account the aforementioned parameters, preferences and rules deposited in the memory unit 92 when determining the routing path of a call.

## Claims

1. A method of routing a telephone call in a network (21, 22, 31, 32, 33),
**characterized in**
**that** the method comprises the steps of:
receiving at a routing node (9, 219, 329) of the network (21, 22, 31, 32, 33) a call request (2001, 3001) of a telephone call originating from a calling party, the call request (2001, 3001) specifying a telephone number associated with a called party;
referring by the routing node (9, 219, 329) to a memory unit (92) of the routing node (9, 219, 329), the memory unit (92) comprising portability-related information;
determining by the routing node-(9, 219, 329) if said telephone number is a ported telephone number based on the portability-related information stored in the memory unit (92); and
if said telephone number is a ported telephone number, providing for a routing of the telephone call to the called party based on said portability-related information.

2. The method of claim 1,
**characterized in**
**that** the method comprises the further steps of:
receiving at a node (3101) of the network (21, 22, 31, 32, 33) the call request (2001, 3001) of the telephone call originating from the calling party; and
forwarding the call request (2001, 3001) to said routing node (9, 219, 329).

3. The method of claim 1,
**characterized in**
**that** the method comprises the further steps of:
handling by the routing node (9, 219, 329) the portability-related processing of the telephone call as a routing task;
providing for the routing of the telephone call to the called party by specifying a network node (2202, 3304) currently serving the ported telephone number; and
routing the telephone call to the specified network node (2202, 3304).

4. The method of claim 1,
**characterized in**
**that** the method comprises the further step of:
processing the telephone call by taking into account one or more of the following routing parameters: destination of the telephone call, origin of the telephone call, signalling parameters, time, priority level, user preferences.

5. The method of claim 1,
**characterized in**
**that** the method comprises the further steps of:
accumulating portability-related data during routing operation; analysing the accumulated data and gaining update data concerning portability-related information; and
updating the portability-related information of said memory unit (92) with said update data.

6. The method of claim 1,
**characterized in**
**that** the method comprises the further step of:
holding portability-related information in a cache memory of said memory unit (92);
accessing the portability-related information in the cache memory for routing purposes.

7. The method of claim 1,
**characterized in**
**that** the method comprises the further step of:
initiating by the routing node (9, 219, 329) an announcement regarding the portability to the calling party.

8. A routing node (9, 219, 329) of a network (21, 22, 31, 32, 33) for routing a telephone call in the network (21, 22, 31, 32, 33),
**characterized in**
**that** the routing node (9, 219, 329) comprises a control unit (91) and a memory unit (92), whereby the control unit (91) is adapted to receive a call request (2001, 3001) of a telephone call originating from a calling party, the call request (2001, 3001) specifying a telephone number associated with a called party, refer to the memory unit (92), the memory unit (92) comprising portability-related information, determine if said telephone number is a ported telephone number based on the portability-related information stored in the memory unit (92), and if said telephone number is a ported telephone number, provide for a routing of the telephone call to the called party based on said portability-related information.

9. The routing node of claim 8,
**characterized in**
**that** the routing node (9, 219, 329) is a stand-alone network node or is implemented in a switch or a soft-switch of the network (21, 22, 31, 32, 33).

10. A computer program product for routing a telephone call in a network (21, 22, 31, 32, 33),
**characterized in**
**that** the computer program product, when executed by a routing node (9, 219, 329) of the network (21, 22, 31, 32, 33), performs the steps of:
on receipt of a call request (2001,3001) of a telephone call originating from a calling party, the call request (2001, 3001) specifying a telephone number associated with a called party, referring by the routing node (9, 219, 329) to a memory unit (92) of the routing node (9, 219, 329), the memory unit (92) comprising portability-related information;
determining by the routing node (9, 219, 329) if said telephone number is a ported telephone number based on the portability-related information stored in the memory unit (92); and
if said telephone number is a ported telephone number, providing for a routing of the telephone call to the called party based on said portability-related information.
